## Europäisches Patentamt

## European Patent Office

## Office européen des brevets

(11) Veröffentlichungsnummer: **0 098 245**
**B1**

(12) **EUROPÄISCHE PATENTSCHRIFT**

(45) Veröffentlichungstag der Patentschrift:
**08.10.86**

(21) Anmeldenummer: **83810277.0**

(22) Anmeldetag: **21.06.83**

(51) Int. Cl.⁴: **D 04 G 3/04**

(30) Priorität: **28.06.82 CH 3954/82**

(43) Veröffentlichungstag der Anmeldung:
**11.01.84 Patentblatt 84/2**

(45) Bekanntmachung des Hinweises auf die Patenterteilung:
**08.10.86 Patentblatt 86/41**

(84) Benannte Vertragsstaaten:
**AT BE CH DE FR GB IT LI LU NL SE**

(56) Entgegenhaltungen:
**CH - A - 132 580**
**DE - B - 1 121 267**
**GB - A - 205 242**
**GB - A - 324 976**
**GB - A - 1 276 508**
**US - A - 3 379 222**

(54) Verfahren und Vorrichtung zum Knüpfen von Teppichen.

(73) Patentinhaber: **MADAG Maschinen- und Apparatebau Dietikon AG, Poststrasse 45, CH-8953 Dietikon (CH)**

(72) Erfinder: **Der Erfinder hat auf seine Nennung verzichtet**

(74) Vertreter: **Tschudi, Lorenz et al, Bovard AG Patentanwälte VSP Optingenstrasse 16, CH-3000 Bern 25 (CH)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung bezieht sich auf ein Verfahren sowie eine Vorrichtung zum Knüpfen von Teppichen gemäss den Oberbegriffen der Patentansprüche 1 und 8.

Es ist eine Vorrichtung zum halbautomatischen «Knüpfen» von Teppichen bekannt. Diese Vorrichtung wird durch einen Handantrieb über den Stramin transportiert, wobei jeweils ein Garnstück in der Mitte gefaltet, zwischen zwei Straminfäden eingelegt wird, so dass es eine Schlaufe bildet und die zwei Enden des Stückes oben über den Stramin abstehen. Nach dem Einlegen aller Garnstücke in den Stramin wird dieser auf der Unterseite mit einer Leimschicht überzogen. Der Nachteil dieser bekannten Vorrichtung besteht darin, dass die einzelnen Garnstücke nicht mit dem Stramin verknüpft, sondern mit diesem verleimt werden. Diese geleimten Teppiche sind hart anzufühlen und können bei Einfluss von Feuchtigkeit Schaden erleiden.

Im weiteren ist aus der DE-B 1 121 267 eine Vorrichtung zum Herstellen von geknüpften Teppichen durch Einknüpfen von Florfäden abgepasster Länge in eine Unterlage vorbekannt. Der Träger weist an seinem vorderen Ende mindestens eine in die Unterlage einstossbare Öse auf und ist mit zwei Greifern zum Erfassen des Florfadens versehen, welche Greifer an einem auf dem Träger gegen Federkraft verschiebbaren Schlitten angeordnet und durch die Öse hindurch bewegbar sind. Es sind entweder bei in ihrer Lage zueinander feststehenden Greifern zwei gegeneinander verschwenkbare Ösen vorgesehen oder bei Anordnung von nur einer feststehenden Öse die Greifer gegeneinander beweglich angeordnet. Es handelt sich bei dieser Vorrichtung also um ein Handknüpfgerät, mit welchem bereits zugeschnittene Garnstücke einzeln mit dem Stramin verknüpft werden. Diese Vorrichtung besitzt den Nachteil, dass die Arbeitsgeschwindigkeit nur etwa zweimal grösser als beim reinen Knüpfen von Hand ist. Im weiteren sind die Knoten nicht regelmässig, und es kann nicht Wolle ab Strang verwendet werden.

Aus der GB-A 205 242 ist ein Apparat zum Knüpfen von Teppichen vorbekannt. Die Vorrichtung weist einen Antriebsmechanismus zum Transportieren der Vorrichtung über einen Straminhalter auf. Im weiteren ist ein Zuführmittel zur Zuführung des Knüpfgarnes, Transportmittel zum Transport des Garnes zum Knüpfbereich, ein weiteres Transportmittel zum Führen des Garnes in den Bereich einer Nadel und ein drittes Transportmittel zum Führen des Garnes durch eine in der Nadel vorgesehene Öffnung sowie ein Abschneidemittel vorgesehen. Mit dieser Vorrichtung können nur einfache Knoten in einfädigen Stramin geknüpft werden. Mit dieser kompliziert aufgebauten Vorrichtung ist es nicht möglich einen doppelten Knoten in einen doppelfädigen Stramin zu knüpfen, welche doppelten Knoten die Teppichqualität wesentlich erhöhen.

Es ist eine Aufgabe der vorliegenden Erfindung ein Verfahren sowie eine Vorrichtung zum Knüpfen von Teppichen zu schaffen, mit welcher einerseits das Garn mit dem Stramin verknüpft wird, ohne dass ein Verleimen notwendig ist und andererseits die Knüpfgeschwindigkeit wesentlich höher ist als mit dem bekannten Handknüpfgerät gemäss der DE-B 1 121 267. Es sollen mit dem Verfahren und der Vorrichtung doppelte Knoten in doppelfädigem Stramin hergestellt werden können, wobei im Gegensatz zum Apparat gemäss der GB-A 205 242 die Vorrichtung einfacher ausgebildet sein und beim Knüpfen ein wertvollerer Knoten erhalten werden soll.

Dies wird erfindungsgemäss durch die kennzeichnenden Merkmale der unabhängigen Patentansprüche 1 und 8 erzielt.

Durch die zwei im Nadelende vorgesehenen und durch einen vertikalen Zwischensteg getrennten Öffnungen wird beim Knüpfen des Teppichs eine regelmässige Florhöhe erzielt. Es erfolgt ein genügender Anzug des Knotens, wodurch er genügend straff sitzt und gut im Stramin verankert ist.

Der Vorteil der Verwendung eines doppelfädigen Straminess und eines doppelten Knotens liegt darin, dass das Garn senkrecht vom Stramin absteht und sich nicht wie bei bekannten einfachen Knoten in einfachem Stramin umlegt. Dadurch wird ein wertvollerer Knoten erhalten.

Es können verschiedenartige Garne verwendet werden, ohne dass ein separates Zurechtschneiden derselben vor ihrer Verwendung notwendig ist. Das Garn wird in der Maschine selbst abgeschnitten.

Im folgenden werden anhand der beiliegenden Zeichnungen Ausführungsbeispiele der Erfindung näher beschrieben. Es zeigen

Fig. 1 eine perspektivische Gesamtansicht der Knüpfvorrichtung mit Knüpfbett und Musterleser,

Fig. 2 eine Draufsicht auf die von oben geöffnete Knüpfvorrichtung und das Knüpfbett,

Fig. 3 einen Schnitt gemäss Linie III-III der Fig. 2,

Fig. 4 einen Schnitt gemäss Linie IV-IV der Fig. 3,

Fig. 5 einen Vertikalschnitt gemäss der Linie V-V der Fig. 4,

Fig. 6 eine Vorderansicht des Nadelendes,

Fig. 7 eine Ansicht des Kamms,

Fig. 8 eine Draufsicht auf den Kamm,

Fig. 9 eine Ansicht der Wollschranke,

Fig. 10 einen Schnitt gemäss Linie X-X der Fig. 9,

Fig. 11 eine perspektivische Darstellung des Knüpfkopfes,

Fig. 12 einen Schnitt gemäss Linie XII-XII der Fig. 2,

Fig. 13 einen Längsschnitt gemäss Linie XIII-XIII der Fig. 12,

Fig. 14 eine Ansicht von links gemäss Fig. 1 der Knüpfvorrichtung,

Fig. 15 eine Ansicht von rechts gemäss Fig. 1 der Knüpfvorrichtung,

Fig. 16 einen Aufriss des Farbwählers,

Fig. 16a einen Teil des Rastrierbandes,

Fig. 17 eine Draufsicht auf den Farbwähler,

Fig. 18 eine Ansicht der Garnkassette,

Fig. 19 eine Draufsicht auf die Garnkassette,

Fig. 20 einen Schnitt gemäss Linie XX-XX der Fig. 16,

Fig. 21 eine Ansicht des Musterlesers,

Fig. 22 einen Querschnitt gemäss Linie XXII-XXII der Fig. 21,

Fig. 23 einen Schnitt gemäss Linie XXIII-XXIII der Fig. 22,

Fig. 24 einen Längsschnitt durch den Musterleser,

Fig. 25 die einzelnen Zahnräder des Musterlesers,

Fig. 26 bis 36 den Bewegungsablauf der einzelnen Werkzeuge der Knüpfvorrichtung.

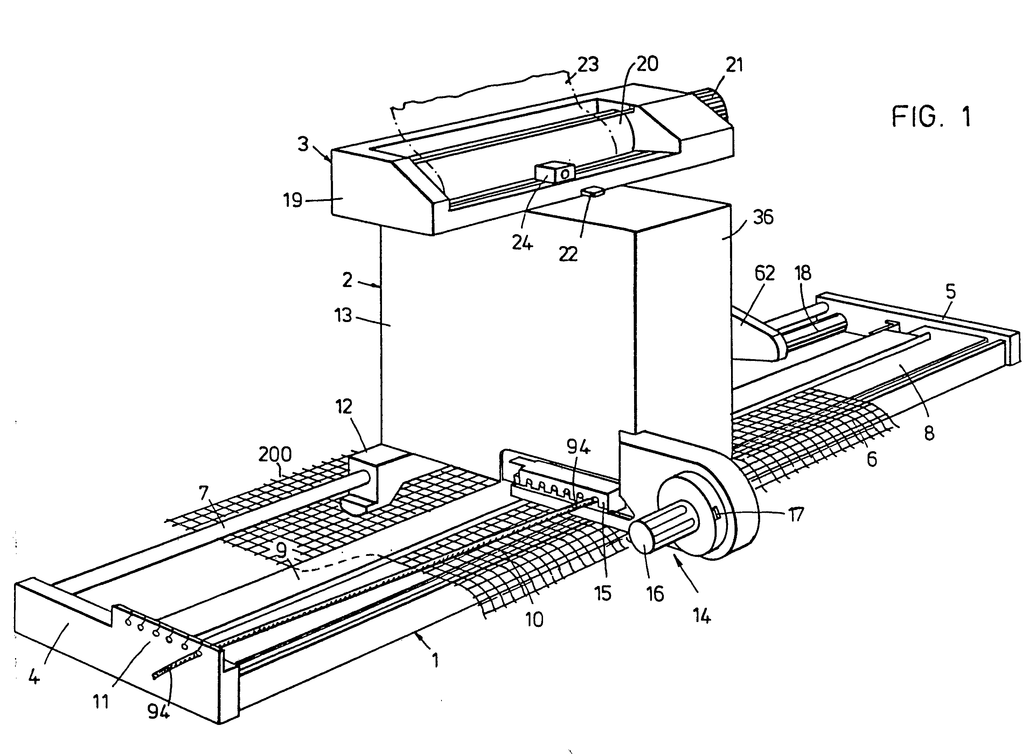

Aus der Fig. 1 ist die auf das Knüpfbett 1 aufgesetzte Knüpfvorrichtung 2 ersichtlich. Oben auf die Knüpfvorrichtung 2 ist der Musterleser 3 aufgesetzt. Die linke Seitenwand 4 und die rechte Seitenwand 5 des Knüpfbettes 1 sind vorne gemäss Fig. 1 durch eine Vorderwand 6 und hinten gemäss Fig. 1 durch eine Führungsstange 7 verbunden. An die Vorderwand 6 schliesst der Straminhalter 8 an. An den Seitenwänden 4 und 5 ist eine Zahnschiene 9 umklappbar gehalten. In die Zahnschiene 9 greift ein in Fig. 1 nicht dargestelltes Schneckenrad zur Fortbewegung der Knüpfvorrichtung 2 auf dem Knüpfbett 1 ein. Der Zwischenraum zwischen der Vorderwand 6 und dem Straminhalter 8 dient als Knüpfnut 10. Auf der linken Seitenwand 4 ist ein Garnhalter 11 zur Führung der verschiedenfarbigen Garne vorgesehen.

Die Knüpfvorrichtung 2 ist mittels eines Lagerschlittens 12, der durch die Führungsstange 7 geführt ist, auf dem Knüpfbett seitlich bewegbar. Am Gehäuse 13 der Knüpfvorrichtung 2 ist links gemäss Fig. 1 der Farbwähler 14 vorgesehen. Der Farbwähler 14 umfasst eine Garnkassette 15, einen Einstellknopf 16 zur Wahl des Garnes sowie einen Farbindex 17. Eine Antriebskurbel 18 dient zur Fortbewegung der Knüpfvorrichtung 2 auf dem Knüpfbett 1. Anstelle der Handkurbel 18 könnte auch ein Elektromotor verwendet werden.

Der oben auf der Knüpfvorrichtung vorgesehene Musterleser 3 umfasst ein Gehäuse 19, eine Walze 20, einen Drehknopf 21 zur manuellen Betätigung der Walze 20, einen Feststellknopf 22 zum Einziehen einer Vorlage 23 sowie einen Farbanzeiger mit Lupe 24 zum Ablesen der Vorlage 23.

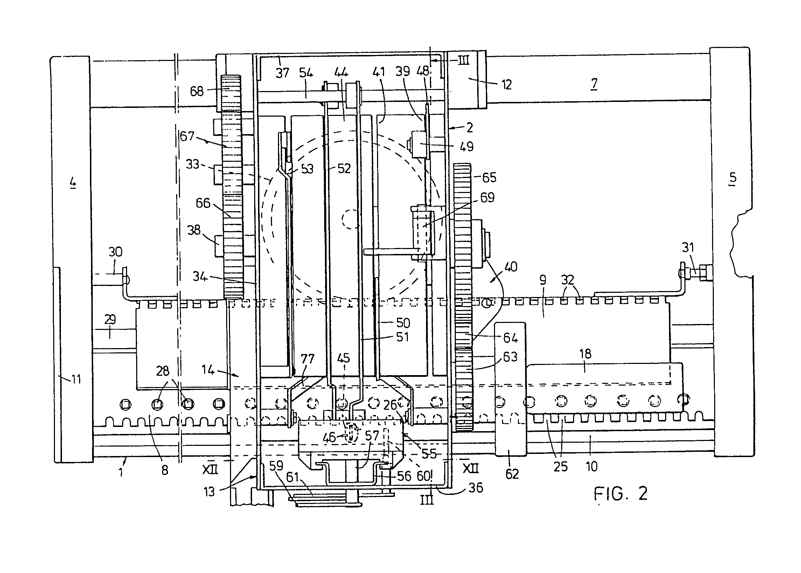

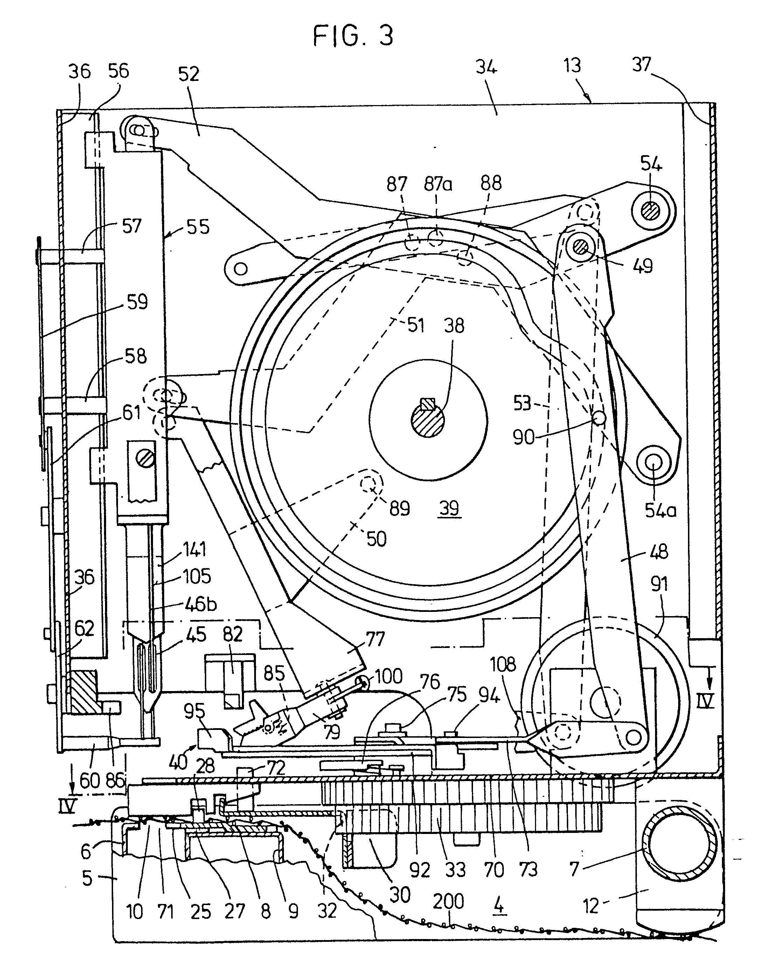

Aus der Fig. 2 ist das Knüpfbett 1 noch im Detail ersichtlich. Der Straminhalter 8 weist an seinem gemäss Fig. 2 vorderen Ende Haltezähne 25 zum Einführen eines Zentrierstiftes 26 der Knüpfvorrichtung 2 auf. Hinter den Haltezähnen 25 ist ein sogenannter Haltekamm 27 (Fig. 3) mit über den Straminhalter 8 abstehenden Zapfen 28 zur Halterung des Stramins vorgesehen. Zwischen dem Straminhalter 8 und der Zahnschiene 9 ist noch ein Träger 29 vorgesehen, welcher an den Seitenwänden 4 und 5 befestigt ist. Die Zahnschiene ist um zwei Drehhalterungen 30 und 31 nach oben aufklappbar angeordnet. Die Zahnschiene 9 muss nach oben aufgeklappt werden, wenn nach dem Knüpfen einer Zeile der Stramin neu aufgesteckt wird. In die hinten gemäss Fig. 2 in der Zahnschiene 9 vorgesehenen Zähne 32 greift das an der Knüpfvorrichtung 2 vorgesehene Zahnrad 33 zum Transport der Knüpfvorrichtung ein. Das Knüpfbett 1 kann mit Zwischenstücken verlängert werden, so dass auch sehr breite Teppiche geknüpft werden können.

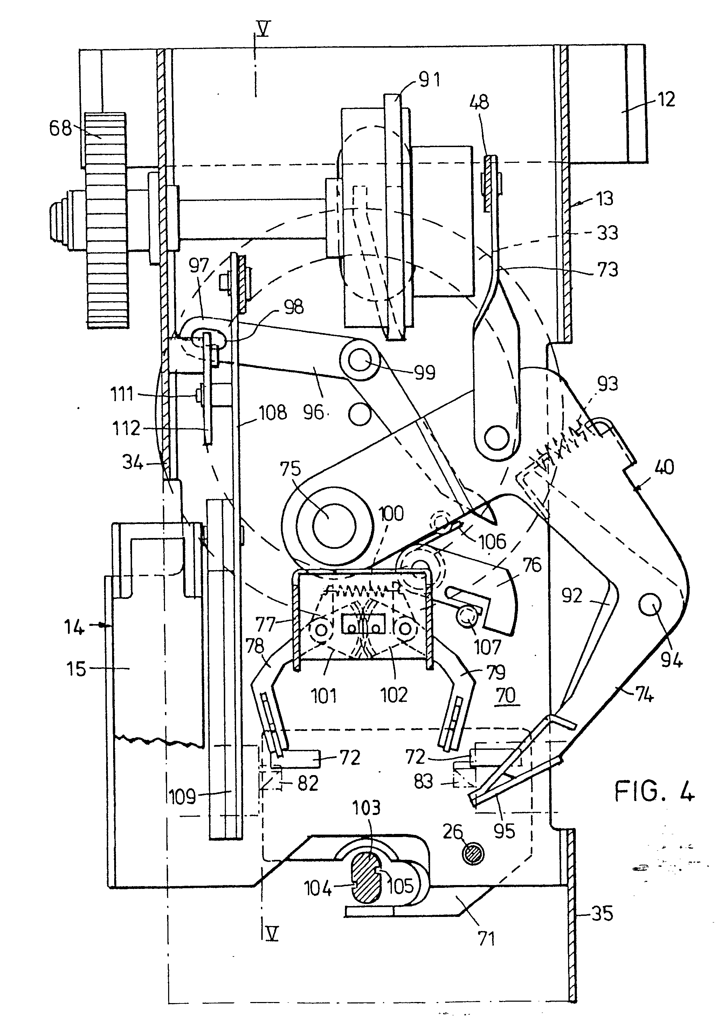

Das Gehäuse 13 der Knüpfvorrichtung umfasst eine linke Seitenwand 34, eine rechte Seitenwand 35 (Fig. 4), eine Vorderwand 36 sowie eine Rückwand 37. Innerhalb des Gehäuses sind mehrere Kurvenscheiben auf einer gemeinsamen Achse 38 vorgesehen, nämlich eine Kurvenscheibe 39 zur Steuerung eines Wolleinziehers 40, eine Kurvenscheibe 41 zur Steuerung zweier Umschlinger 78 und 79 (Fig. 4), eine Kurvenscheibe 44 zur Steuerung einer Nadel 45, zwei Kreuzarme 46, sowie eine Kurvenscheibe 47 zum Steuern der Schneidebewegung.

Der von der Kurvenscheibe 39 betätigte Antriebshebel 48 für den Wolleinzieher ist auf dem Lagerzapfen 49 gelagert. Die Umschlinger 78 und 79 werden vom Antriebshebel 50 für die Umschlinger gesteuert. Durch die Kurvenscheibe 44 zur Steuerung der Nadel und Kreuzarme, werden der Antriebshebel 51 für die Nadel und der Antriebshebel 52 für die Kreuzarme betätigt. Von der Kurvenscheibe 47 zur Steuerung des Schneidvorganges wird der Antriebshebel 53 zum Schneiden und Wiederöffnen der Greiferarme betätigt. Die Antriebshebel für die Nadel und für die Kreuzarme sind auf einer Welle 54 und einer in Fig. 3 gezeigten Welle 54a gelagert.

Die Nadel sowie die Kreuzarme sind an einem auf- und abbewegbaren Knüpfkopf 55 vorgesehen. Dieser Knüpfkopf ist in einer Führungsschiene 56 geführt. Ein Kulissenblech 59, zur Steuerung einer Wollschranke, ist über einen Distanzbolzen 57 und einen in Fig. 3 dargestellten Distanzbolzen 58 mit dem Knüpfkopf verbunden. Ein Abweisbolzen 60 wird über einen durch das Kulissenblech 59 gesteuerten Antriebshebel 61 bewegt.

Die Antriebskurbel 18 ist über einen Kurbelarm 62 mit einem Zahnrad 63 verbunden. Das Zahnrad 63 treibt über ein Zwischenzahnrad 64 ein auf die Achse 38 zum Antrieb der verschiedenen Kurvenscheiben gelagertes Zahnrad 65. Auf dem anderen Ende der Achse 38 ist ein Zahnrad 66 befestigt, welches über ein Zwischenzahnrad 67 ein Antriebszahnrad 68 zum Antrieb einer in Fig. 2 nicht dargestellten Schnecke antreibt. Im weiteren ist der Antriebshebel 69 zur Betätigung des Musterlesers 3 ersichtlich, welcher nach der Knüpfung eines Knotens die Walze 20 mit der Vorlage 23 eine Stelle weiter bewegt. Ein Pendelarm 77 wird weiter unten mit Bezug auf Fig. 3 beschrieben.

In Fig. 3 sind die verschiedenen Antriebshebel zur Betätigung der Werkzeuge zur Ausführung des Knüpfvorganges noch in Seitenansicht dargestellt. An einer Bodenplatte 70 des Gehäuses der Knüpfvorrichtung ist ein Knüpffuss 71 vorgesehen. Am Knüpffuss 71 sind Rollen 72 zu einer reibungsarmen Bewegung der Knüpfvorrichtung auf der Zahnschiene 9 befestigt. Der Antriebshebel 48 für den Wolleinzieher ist über einen Zwischenhebel 73 mit dem Greiferhauptarm verbunden. Der Greiferhauptarm 74 ist an einem Lagerbolzen 75 drehbar befestigt. Eine Klinke 76 dient zum Öffnen des beweglichen Greiferarmes. Der Antriebshebel 50 für die Umschlinger ist mit einem Pendelarm 77 verbunden. Die vorderen Teile der Umschlingerarme 78 und 79 weisen oben je eine Klinke 80, 81 auf. Mit Steuerkulissen 82 und 83 werden die Klinken bei der Bewegung des Pendelarmes auf den Knüpfkopf 55 zu kurzzeitig geöffnet. Die Klinken 80, 81 werden durch Federn 84 und 85 in ihrer geschlossenen Lage gehalten. Eine an der Vorderwand 36 angebrachte vordere Steuerkulisse 86 führt die Umschlinger 78 und 79 wieder zusammen. Im weiteren sind aus der Fig. 3 noch die Antriebshebel 52 für die Nadel, am Antriebshebel 51 für die Kreuzarme, am Antriebshebel 53 zum Schneiden und Wiederöffnen der Greiferarme sowie am Antriebshebel für den Wolleinzieher angebrachten Nocken 87, 87a, 88, 89 und 90 ersichtlich, welche in den entsprechenden Nuten in den Kurvenscheiben geführt werden. Im weiteren ist aus der Fig. 3 das Schneckenrad 91 zum Betätigen des Antriebszahnrades 33 ersichtlich.

Aus Fig. 4 sind noch deutlicher der Greiferhauptarm 74 sowie der bewegliche Greiferarm 92 ersichtlich. Eine Druckfeder 93 drückt den Greiferhauptarm 74 sowie den beweglichen Greiferarm 92 in Normalstellung zusammen. Bei der Bewegung des Greiferarmes auf die Wollkassette zu, wird durch die Klinke 76 der bewegliche Greiferarm 92 gegen den Druck der Feder 93 um den Lagerbolzen 94 gedreht. Der Wolleinzieher ist somit bereit, um das in der Wollkassette 15 befindliche Garn 94 in die Einzugszange 95 zu bringen. Beim Fortführen der Drehbewegung der Greiferarme des Wolleinziehers um den Lagerbolzen 75, rutscht der bewegliche Greiferarm 92 über die Klinke 76 und wird durch den Druck der Feder 93 wieder gegen den Greiferhauptarm 74 gedrückt. Der Wollfaden befindet sich damit fest in der Einzugszange 95. Ein Hebel 96 zum Wiederöffnen der Greiferarme wird ebenfalls durch den Antriebshebel 53 zur Ausführung der Schneidebewegung betätigt. Diese zweite Öffnung der Greiferarme 74 und 92 geschieht nach der Rückwärtsbewegung derselben in die etwa in Fig. 4 gezeichnete Position. Der Endteil 97 des Hebelarmes 96 wird in einer Nut 98 verschoben, wobei sich der Hebel 96 um den Drehbolzen 99 dreht.

Wie aus der Fig. 4 ebenfalls ersichtlich ist, werden die beiden Umschlinger 78 und 79 durch eine Feder 100 in einer geöffneten Lage gehalten.

Die Umschlinger 78 und 79 weisen an ihrem rückwärtigen Ende je ein Zahnsegment 101 und 102 zum zwangsläufigen Zusammenwirken auf. Der im Knüpfkopf 55 geführte Nadelkopf 103 weist zwei seitliche Rillen 104 und 105 zum Führen der Kreuzarme auf. Die Klinke 76 ist im weiteren mit einer Feder 106 versehen, welche dieselbe an einen Anschlag 107 drückt.

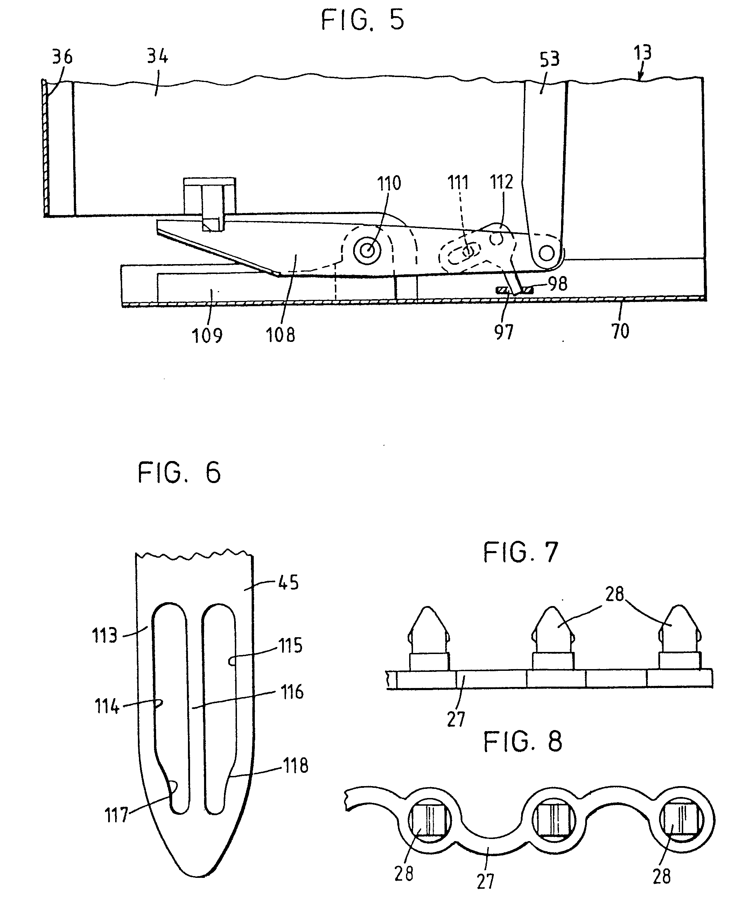

Aus Fig. 5 ist das durch den Antriebshebel 53 betätigte Schneidmesser 108 ersichtlich. Zwischen dem Schneidmesser 108 und dem Gegenmesser 109 wird das jeweilige Garn abgeschnitten. Das Schneidmesser 108 ist drehbar an einem Lagerzapfen 110 befestigt. Mit einem am Schneidmesser 108 vorgesehenen Nocken 111 wird ein Winkelhebel 112 betätigt, der in den Schlitz 98 des Hebels 96 zum Wiederöffnen der Greiferarme eingreift.

In Fig. 6 ist das Nadelende 113 in Vorderansicht dargestellt. Es sind zwei vertikale Öffnungen 114 und 115 vorgesehen, die durch einen Zwischensteg 116 getrennt sind. Die Öffnungen 114 und 115 sind an ihren unteren Enden 117 und 118 etwas verjüngt. Durch die Verjüngung wird das Garn angezogen. Durch den Zwischensteg wird die Reibung zwischen den zwei, beim Knüpfen durch die Nadel geführten, Garnenden verringert.

In den Fig. 7 und 8 ist der Kamm 27 mit dem Zapfen 28 zur Halterung des Stramins in Ansicht und Draufsicht dargestellt.

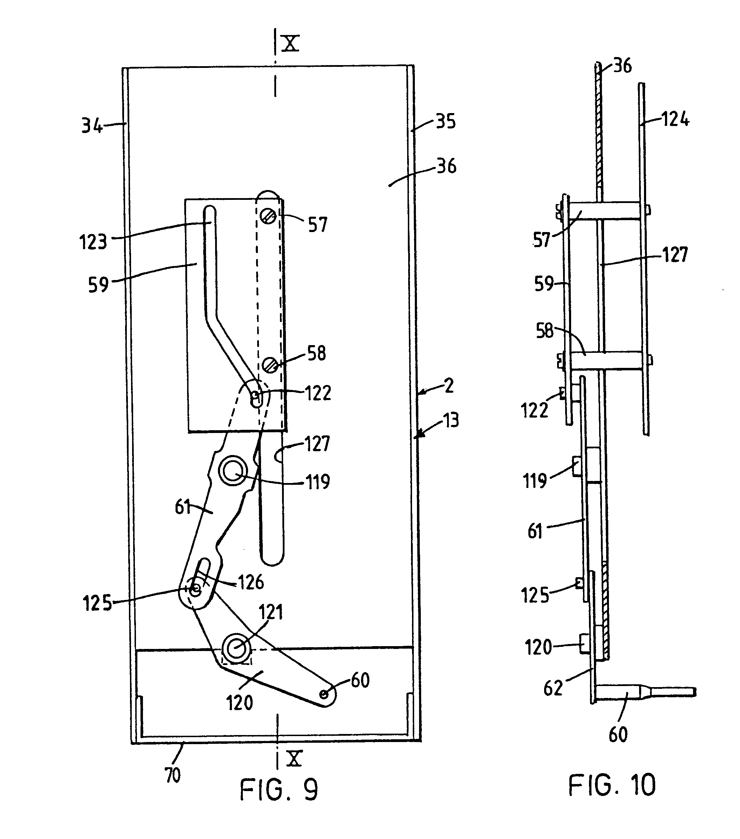

In den Fig. 9 und 10 ist die Wollschranke in Ansicht und im Schnitt dargestellt. Der Antriebshebel 61 ist auf einem Lagerzapfen 119 und ein Schwenkhebel 120 auf einem Lagerzapfen 121 drehbar gelagert. Ein Nocken 122 am oberen Ende des Antriebshebels greift in eine Nut 123 des Kulissenbleches 59 ein. Bei einer vertikalen Bewegung des an einem Befestigungsblech 124 befestigten Knüpfkopfes 55 wird ebenfalls das mit den Distanzbolzen 57 und 58 am Befestigungsblech 124 befestigte Kulissenblech 59 in vertikaler Richtung verschoben. Dabei wird der Antriebshebel 61 um den Lagerzapfen 119 verdreht, was eine Verschwenkung des Schwenkhebels 120 um den Lagerzapfen 121 zur Folge hat. Ein am Schwenkhebel befestigter Nocken 125 greift in einen Schlitz 126 am Antriebshebel 61 ein. Am anderen Ende des Schwenkhebels 120 ist der Abweisbolzen 60 befestigt. Die beiden Distanzbolzen 57 und 58 sind bei einer vertikalen Bewegung des Knüpfkopfes in einem in der Vorderwand 36 vorgesehenen vertikalen Schlitz 127 durchgeführt.

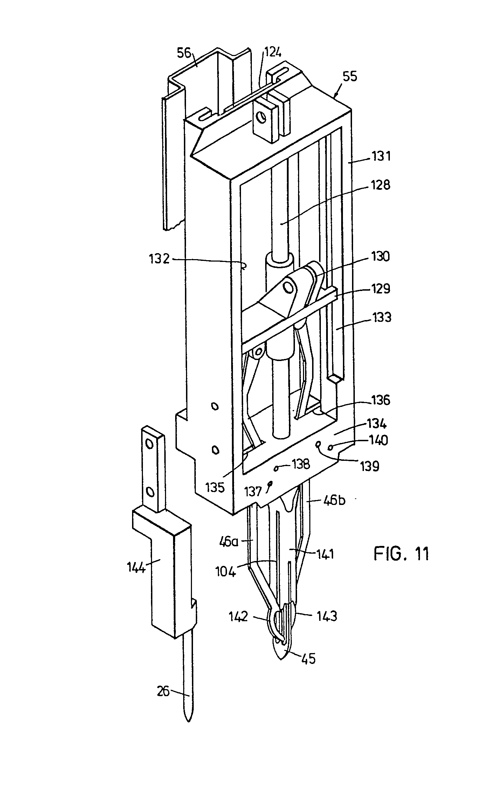

Der Knüpfkopf 55 gemäss Fig. 11 ist in einer Knüpfkopfführung 56 geführt. Eine in der Vertikal-Achse des Knüpfkopfes angeordnete Führungssäule 128 dient zur vertikalen Verschiebung eines Gleiters 129 für die Kreuzarme 46, die am Gleiter befestigt sind. Oben am Gleiter 129 ist ein Lager 130 zur Ankuppelung des Antriebshebels 51 vorgesehen. Der Knüpfkopf 55 selbst wird im wesentlichen durch ein Joch 131 mit darin vorgesehenen Führungsrippen 132 und 133 für den Gleiter sowie einem Führungsblock 134 gebildet. Im Führungsblock 134 sind Schlitze 135 und 136 vorgesehen, durch welche die Kreuzarme hindurchgeführt werden. Quer zu den beiden Schlitzen sind je zwei Führungsbolzen 137, 138 respektive 139, 140 vorgesehen, welche die Bewegung der Kreuzarme steuern. Unten an den Führungsblock 134 schliesst sich in der vertikalen Achse der Nadelhals 141 an, in welchem die Nadel 45 eingelassen ist. Die Kreuzarme werden entlang dem Nadelhals 141 in den Nuten 104 und 105 geführt. Die Kreuzarme 46 sind an ihren Endteilen 142 und 143 abgebogen. Der Zentrierstift 26 wird mit einem Halteblock 144 am Joch 131 befestigt.

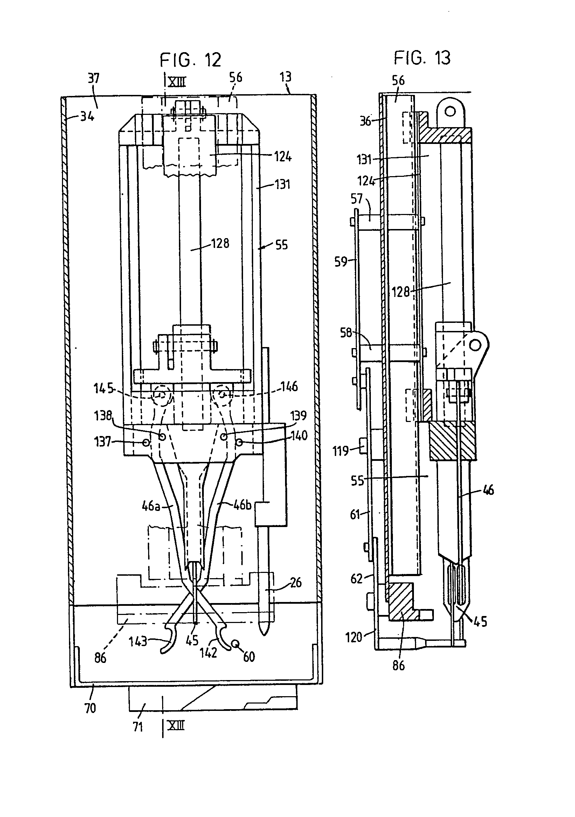

In den Fig. 12 und 13 ist der Knüpfkopf noch in zwei Schnitten dargestellt. Aus der Fig. 12 ist die Führung der Kreuzarme 46 zwischen den Bolzen 137 und 138 respektive 139 und 140 noch besser ersichtlich. Die Kreuzarme sind am Gleiter 129 mit Laschen 145 und 146 drehbar befestigt. In dieser Figur ist der Knüpfkopf in seiner Ausgangslage dargestellt.

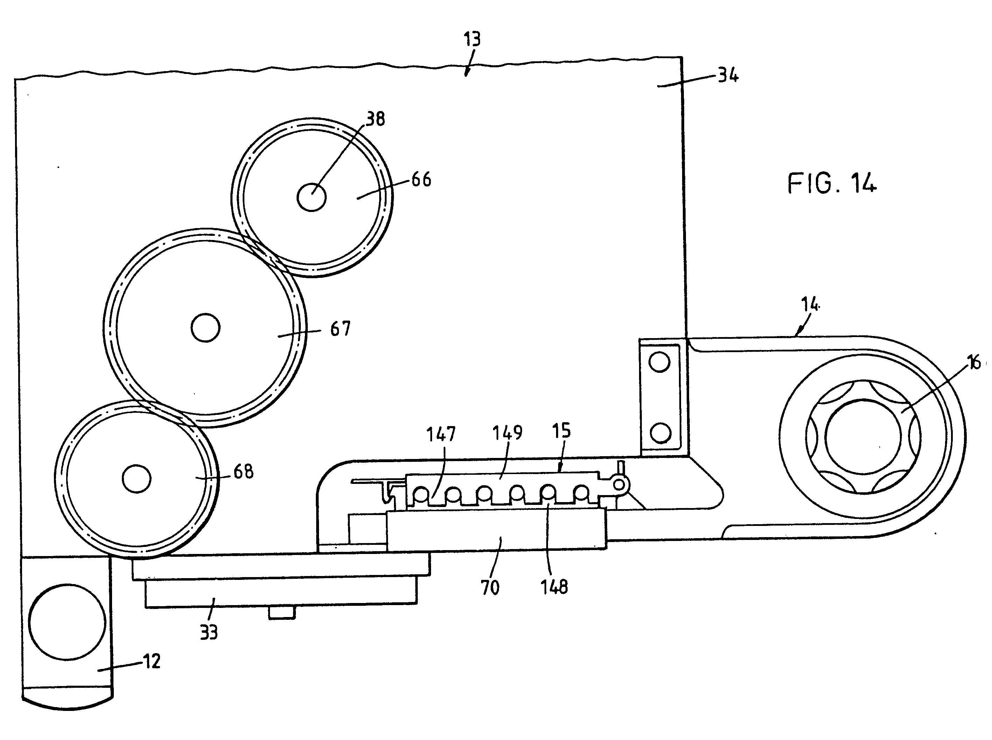

Aus der Fig. 14 ist eine Ansicht von links gemäss Fig. 1 der Knüpfvorrichtung ersichtlich. Das von der Antriebskurbel 18 betätigte Zahnrad 66 treibt über das Zwischenzahnrad 67, das auf der gleichen Achse wie das Schneckenrad 91 befestigte Zahnrad 68 an. Die Garnkassette 15 weist sechs Öffnungen 147 zum Einführen der verschiedenfarbigen Garne auf. Die Kassette umfasst im wesentlichen einen Boden 148 sowie einen Deckel 149. Mit dem Einstellknopf 16 wird die Garnkassette 15 in horizontaler Richtung verschoben, so dass das Garn mit der gewünschten Farbe in den Knüpfbereich zu liegen kommt.

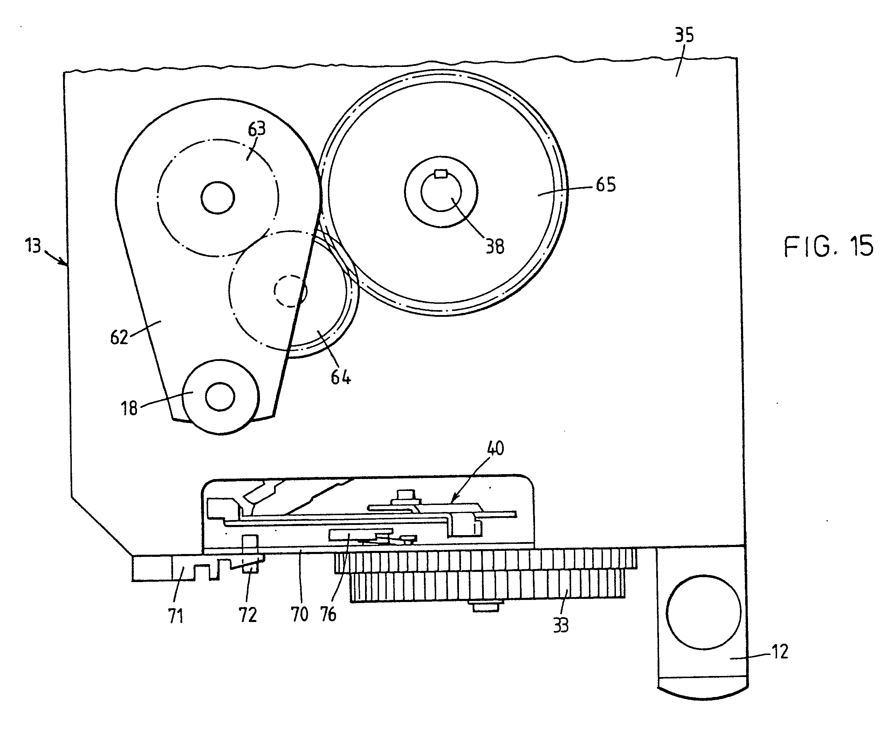

In Fig. 15 ist eine Ansicht von rechts gemäss Fig. 1 der Knüpfvorrichtung dargestellt. Mit der Kurbel 18 wird über den Kurbelarm 62 das Zahnrad 63 in Rotation versetzt. Über ein Zwischenzahnrad 64 wird das mit der Achse 38, auf welcher sich die Kurvenscheiben befinden, verbundene Zahnrad 65 angetrieben.

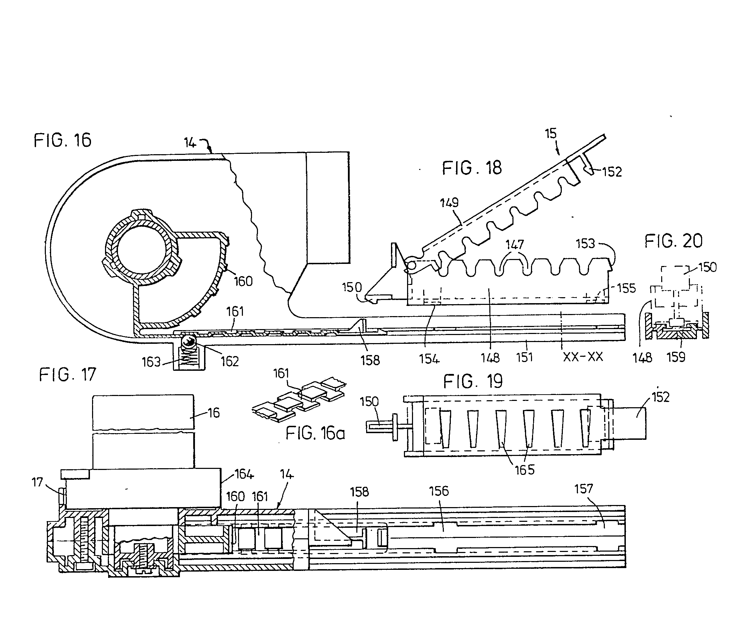

In den Fig. 16, 17 und 18 sind der Farbwähler 14 im Aufriss und in Draufsicht und die Kassette 15 im Aufriss dargestellt. Eine an der Kassette 15 befestigte Kupplung 150 dient zum Einhängen des Kassettenbodens in eine Führungsschiene 151. Mit den beiden Teilen 152 und 153 eines Schnappverschlusses kann der Deckel 149 mit dem Boden 148 nach Einlegen der verschiedenen Garne verschlossen werden. Die Garnkassette wird mit den unten an ihrem Boden befindlichen Führungsstegen 154 und 155 in die entsprechenden Öffnungen 156 und 157 im Boden eingeführt und danach gemäss Fig. 16 und 17 nach links verschoben bis die Kupplung 150 in ihr Gegenstück 158 einrastet, wobei die Führungsstege in einer Führungsnut 159 geführt werden. Mit dem Einstellknopf 16 des Farbwählers, ist drehfest ein Aufwickelsektor 160 verbunden. Der Aufwickelsektor 160 ist über ein Rastrierband 161 mit Kupplungsstück 158 für die Garnkassette verbunden. Fig. 16a zeigt einen Teil des Rastrierbandes in perspektivischer Ansicht. Eine Arretierwalze 162 wird mittels einer Feder 163 gegen das Rastrierband 161 gedrückt, so dass beim Verdrehen des Einstellknopfes 16 die Walze in sechs verschiedenen Positionen des Rastrierbandes in dieses einrastet, um jeweils die gewünschte Garnfarbe in den Knüpfbereich zu bringen. Mit der mit dem Handgriff 16 verbundenen Wählscheibe 164 und dem unter dieser angeordneten Farbindex 17 kann die gewünschte Garnfarbe ausgewählt werden.

In der Draufsicht gemäss Fig. 19 auf die Garnkassette, sind die am Deckel 149 vorgesehenen Kunststofffedern 165 dargestellt, welche bei geschlossener Garnkassette auf die einzelnen Garnfäden drücken und verhindern, dass dieselben in der Garnkassette hin und her rutschen. Hingegen ist die durch die Federn ausgeübte Reibungskraft nur so gross, dass die Garnfäden mit dem Walleinzieher durch die Aussparungen 147 im Boden und im Deckel der Garnkassette hindurchgezogen werden können.

In Fig. 20 ist ein Querschnitt durch die Führungsschiene und die Garnkassette dargestellt, aus welchem der Querschnitt der Führungsnut 159 für die Führungsstege 154 und 155 ersichtlich ist.

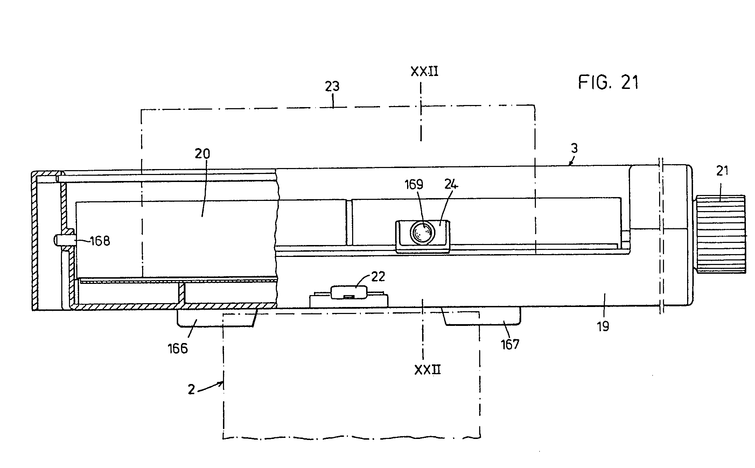

Aus Fig. 21 ist eine Ansicht des auf die Knüpfvorrichtung 2 mit zwei Steckvorrichtungen 166 und 167 aufsteckbaren Musterlesers 3 ersichtlich. Die auf einer Achse 168 gelagerte Walze mit der Vorlage 23 wird durch den Antriebshebel 69 der Knüpfvorrichtung nach dem Knüpfen jedes Knopfes soweit rotiert, bis die nächste Stelle auf der Vorlage unter dem Farbanzeiger 24 mit der Lupe 169 erscheint. Die Vorlagebögen 23 werden «endlos» zusammengeklebt, wobei jeder Umlauf einer Knüpfreihe entspricht. Nach dem Knüpfen einer Reihe wird der Farbanzeiger 24 von Hand eine Stelle verschoben. Lange Teppiche können mit mehreren Bögen hergestellt werden.

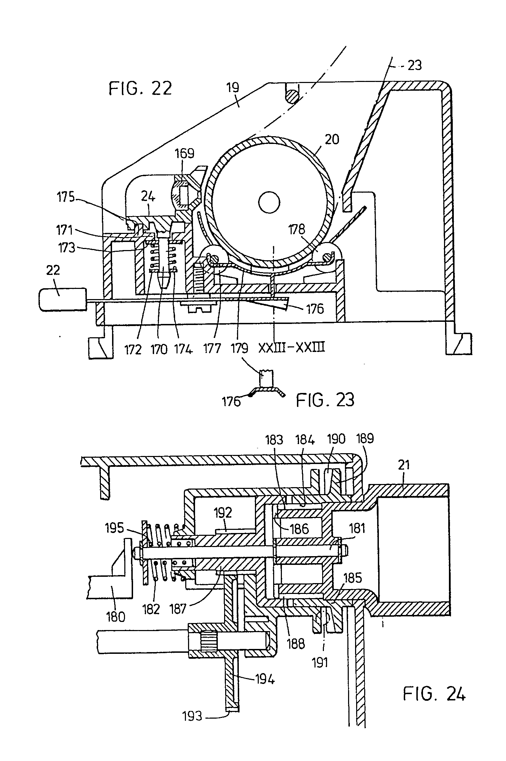

Gemäss Fig. 22 ist der Farbanzeiger 24 mit einem Führungsstift 170 in einer Führungsnut 171 gehalten. Eine zwischen zwei Scheiben 172 und 173 gehaltene Feder 174 erhöht die Reibungskraft beim Hin- und Herschieben des Farbanzeigers auf seiner Führung 175. Mit dem Feststellknopf 22 können über eine Feststellfeder 176 die Rollen 177 und 178 für die Vorlagenführung gegen die Walze 20 gedrückt und von dieser weggezogen werden. Die Rollen 177 und 178 sind durch eine Halterung 179 gehalten, welche mit dem Feststellknopf 22 verschoben werden kann.

In Fig. 23 ist ein Schnitt gemäss Linie XXIII-XXIII der Fig. 22 dargestellt.

Aus dem Längsschnitt durch die Mustervorrichtung gemäss Fig. 24 ist der Antrieb für die Walze 20 des Musterlesers ersichtlich. Der an der Knüpfvorrichtung angeordnete Antriebshebel 69 für den Musterleser wird bei jedem Umgang der Kurvenscheiben durch eine an einer der Kurvenscheiben vorgesehenen Erhöhung einmal nach rechts gemäss Fig. 2 und dann wieder zurück gekippt. Dieser Antriebshebel 69 wirkt auf den aus der Fig. 24 ersichtlichen Hebel 180 ein. Der Hebel 180 drückt über eine Stange 181 den Drehknopf 21 entegegen dem Zug einer Feder 182 nach rechts gemäss Fig. 24. Der Drehknopf 21 greift mit seiner an seinem äusseren Umfang angebrachten Verzahnung 183 einerseits in die innere Verzahnung 184 eines Rastrierrades 185 und andererseits mit seiner stirnförmigen Verzahnung 186 in die am inneren Umfang eines Treiberrades 187 vorgesehene Verzahnung 188 ein. In eine am äusseren Rand 189 des Rastrierrades 185 vorgesehene Verzahnung 190 greift eine Arretierkugel 191 ein. Das Rastrierrad 185 ist in Längsrichtung nicht starr angeordnet, kann jedoch mit dem Drehknopf 21 von Hand verdreht werden, womit auch das Treiberrad gedreht wird. Ein mit dem Treiberrad 187 verbundenes Ritzel 192 greift in die äussere Verzahnung 193 eines Antriebrades 194 für die Walze ein. Eine zur Feder 182 konzentrische innere Feder 195 drückt das Treiberrad 187 gegen das Rastrierrad 185. Bei einer Betätigung des Hebels 180, d.h. ein Verschieben des Drehknopfes 21 nach rechts und danach wieder nach links, erfolgt eine Drehung des Treiberrades 187 und somit eine Drehung der Walze mit der darauf befindlichen Vorlage.

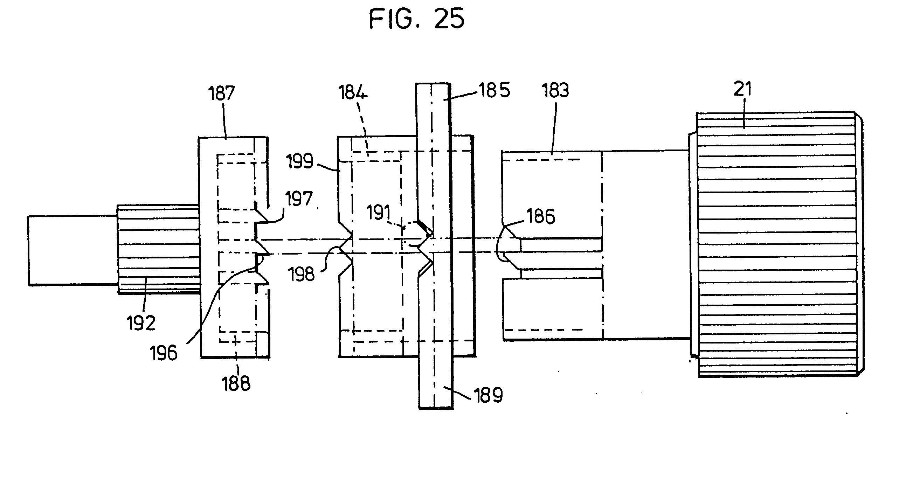

Anhand der in Fig. 25 dargestellten drei Zahnräder soll die Übertragung der Linearbewegung des Hebels 180 in eine Rotationsbewegung des Treiberrades 187 noch näher erläutert werden. Bei der Bewegung des Hebels 180 nach rechts gelangt die äussere Verzahnung 183 des Drehknopfes ausser Eingriff mit der inneren Verzahnung 188 des Treiber. Die äussere Verzahnung 183 des Drehknopfes bleibt jedoch in Eingriff mit der inneren Verzahnung 184 des Rastrierrades 185. Der mittlere dargestellte Zahn 196 der stirnseitigen Verzahnung 197 des Treiberrades 187 gleitet nun mit seiner schrägen Fläche entlang der schrägen Fläche des dargestellten Zahnes 198 der stirnseitigen Verzahnung 199 des Rastrierrades 185, da die Feder 195 das Treibrad gegen das Rastrierrad drückt. Dies bewirkt eine erste Rotationsbewegung des Treibrades. Bei der Rückwärtsbewegung des Hebels 180 nach links gemäss Fig. 24 wirkt die stirnseitige Verzahnung 186 des Drehknopfes 21 mit der inneren Verzahnung 188 des Treibrades in der Weise zusammen, dass die schrägen Flächen der Verzahnung des Treiberrades an den schrägen Flächen der Verzahnung 186 des Drehknopfes entlang gleiten und das Treiberrad eine zweite Rotationsbewegung ausführt. Dabei wird das Treiberrad 187 infolge des Zusammenwirkens seiner stirnseitigen Verzahnung 197 mit der stirnseitigen Verzahnung 199 des Rastrierrades etwas nach links verschoben. Der Drehknopf 21, das Rastrierrad 185 sowie das Treiberrad 187 sind mit ihren Verzahnungen nun wieder drehfest verbunden.

Anhand der nun folgenden Figuren sollen die Bewegungsabläufe der einzelnen Werkzeuge der Knüpfvorrichtung nach näher beschrieben werden.

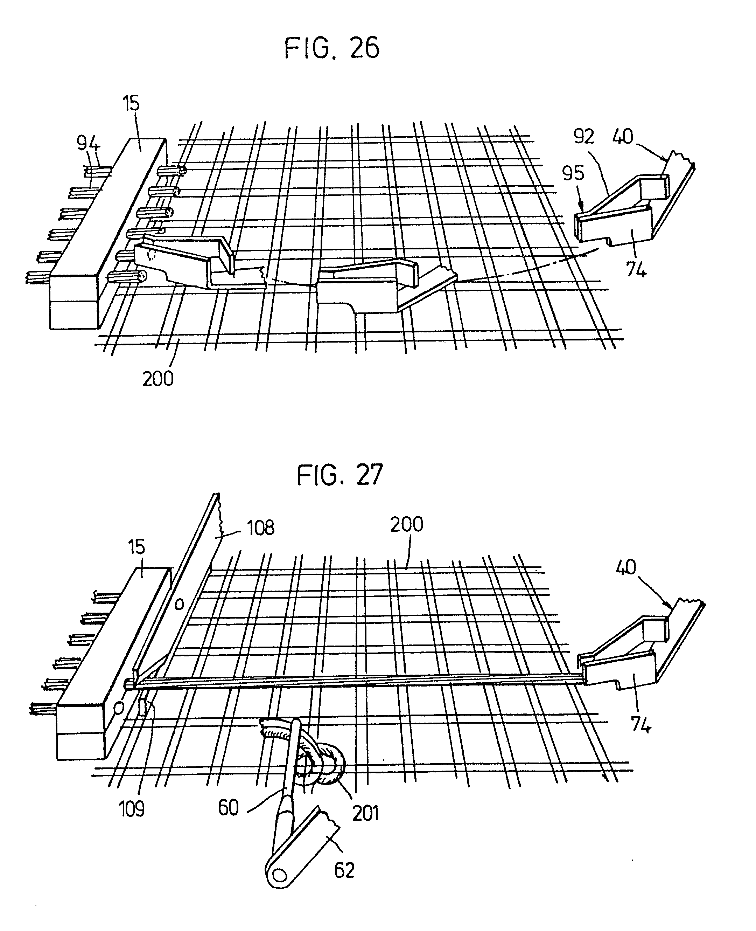

Aus Fig. 26 ist die Bewegung des Wolleinziehers 40 ersichtlich. Bei der Bewegung nach links gemäss Fig. 26 öffnet sich die Einzugszange 95 um das gewünschte Garn 94 zu ergreifen. Bei der dritten Position des Wolleinziehers 40 gemäss Fig. 26 werden die beiden Greiferarme 74 und 92 aufeinander zubewegt, wodurch die Einzugszange geschlossen wird. Der Stramin 200 ist unterhalb der Garnkassette 15 und des Wolleinziehers 40 befindlich. Beim vorliegenden Knüpfvorgang wird doppelfädiger Stramin verwendet.

In Fig. 27 ist der Wolleinzieher 40 in einer Position gezeichnet, in welcher er das Garn um die erforderliche Länge aus der Garnkassette herausgezogen hat. Am kassettenseitigen Ende ist das Garn 94 zwischen dem Schneidmesser 108 und dem Gegenmesser 109, die eine Schere bilden, befindlich. In dieser Lage drückt der vom Antriebshebel 61 betätigte Abweisbolzen 60 der Wollschranke den zuletzt geknüpften Knoten 201 im Stramin auf die Seite.

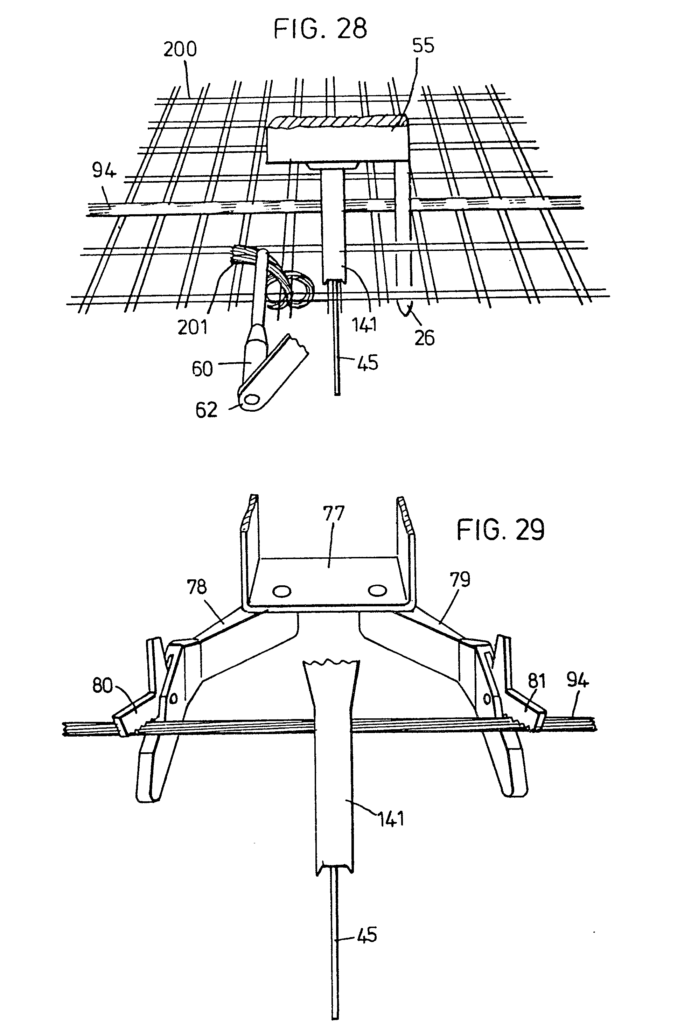

In der Stellung gemäss Fig. 28 ist das Garn 94 noch durch den Wolleinzieher gestreckt, der letzte geknüpfte Knoten 201 wird durch den Abweisbolzen 60 auf die Seite gedrückt. Der Knüpfkopf 55 ist bereits soweit nach unten verschoben, dass die Nadel 45 durch den Stramin 200 hindurchgreift.

Bei der Lage gemäss Fig. 29 sind nun die beiden Umschlingerarme 78 und 79 mit dem Pendelarm 77 nach vorne in Richtung auf das Garn 94 verbracht worden. Dabei sind die beiden Klinken 80 und 81 geöffnet und umfassen das Garn 94.

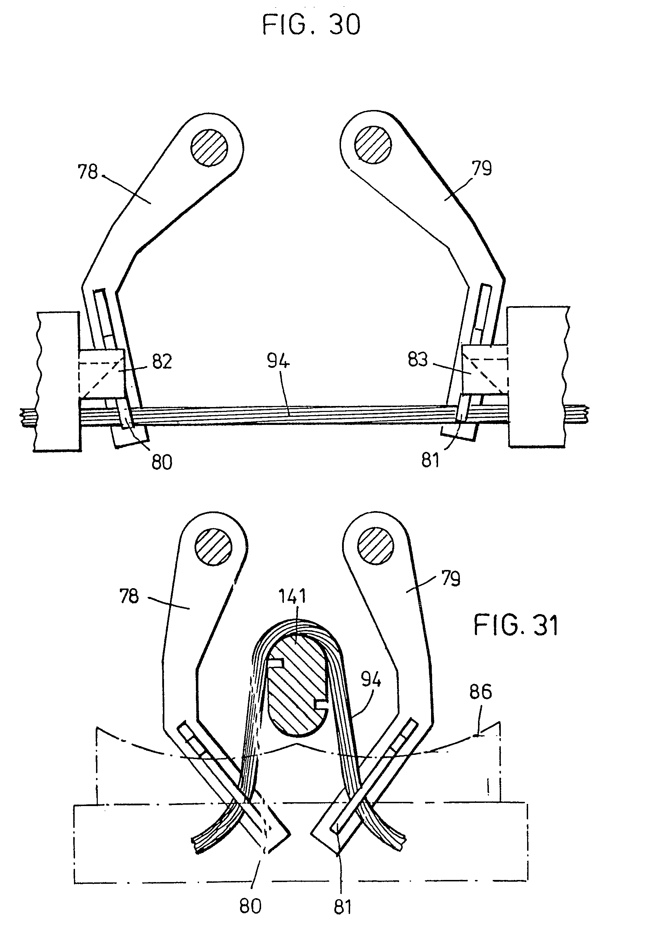

In der Draufsicht auf die Umschlingerarme 78 und 79 gemäss Fig. 30 sind noch die seitlichen Steuerkulissen 82 und 83 ersichtlich, welche die Klinken 80 und 81 öffnen.

In der Stellung gemäss Fig. 31 haben die sich wieder schliessenden Umschlingerarme 78 und 79 das mittlerweile vom Messer 108 abgeschnittene Garn 94 um den Nadelhals 141 gelegt.

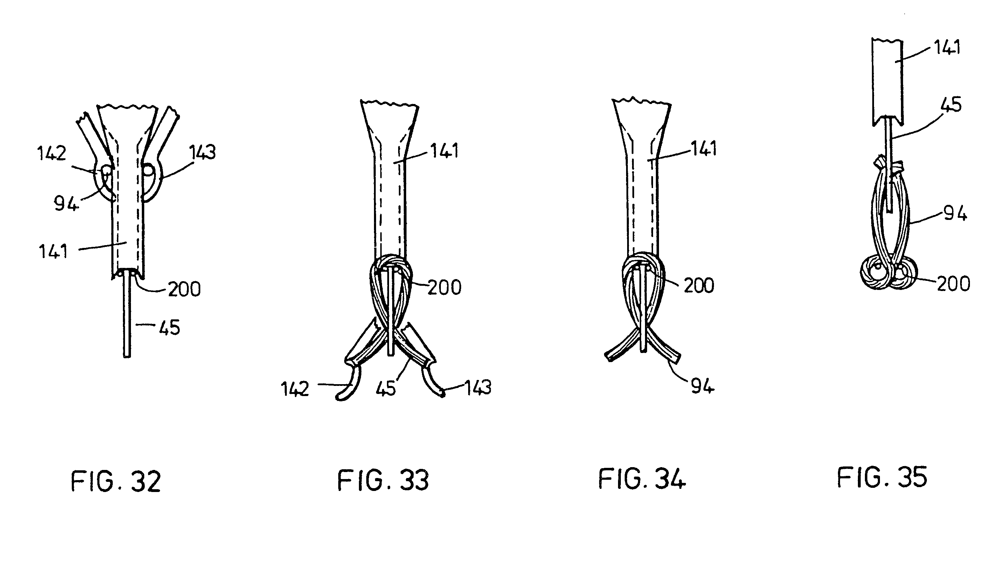

Aus Fig. 32 ist ersichtlich, wie die beiden Kreuzarme 46 mit ihren Endteilen 142 und 143 das Garn 94 ergreifen um es entlang dem Nadelhals 141 nach unten zu schieben. Der Nadelhals 141 liegt dabei auf dem Stramin 200 auf.

In der Position gemäss Fig. 33 haben die dem Nadelhals entlang nach unten gleitenden Kreuzarme 46 mit ihren vorderen Enden 142 und 143 das Garnstück 94 über den Stramin 200 gelegt und die beiden Enden des Garns quer durch die Nadelöffnungen 114 und 115 geführt.

In der Position gemäss Fig. 34 sind die beiden Kreuzarme 46 mit ihrem entsprechenden Antriebshebel wieder zurückgezogen worden. Das abgeschnittene Garn 94 hat dieselbe Lage bezüglich Nadel und Stramin wie in der Position gemäss Fig. 33.

In der Lage gemäss Fig. 35 ist die Nadel 45 durch ihren entsprechenden Antriebshebel über den Stramin 200 zurückgezogen worden. Das abgeschnittene Garn 94 bildet nun einen Knoten im Stramin 200 und zwar einen sogenannten Ghiordesknoten.

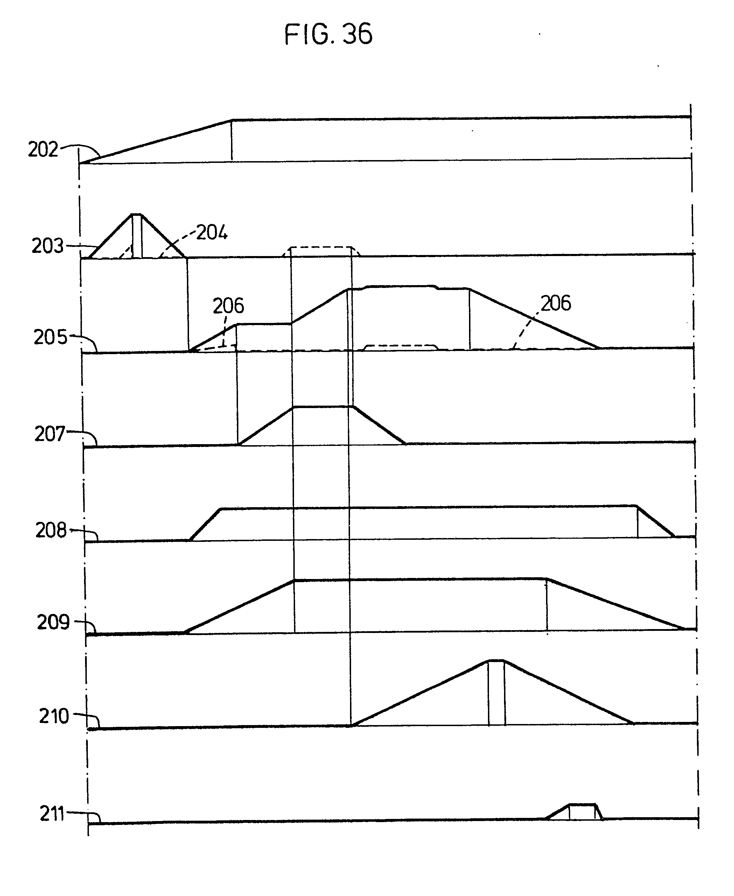

Anhand der Kurvendiagramme gemäss Fig. 36 ist der Bewegungsablauf der einzelnen Werkzeuge der Knüpfvorrichtung dargestellt. Dabei veranschaulichen die Kurven die einzelnen Bewegungen, nämlich die Kurve 202 des Vorschubantriebes, die Kurve 203 des Wolleinziehers, die gestrichelte Kurve 204 des beweglichen Greiferarms des Wolleinziehers, die Kurve 205 des Umschlingers, die gestrichelte Kurve 206 der Klinken der Umschlinger, die Kurve 207 des Messers, die Kurve 208 der Wollschranke, die Kurve 209 des Nadelhubes, die Kurve 210 der Kreuzarme und die Kurve 211 des Musterleserantriebes. Aus diesen Kurven ist z.B. ersichtlich, dass die Bewegung des Umschlingers beginnt, wenn diejenige des Wolleinziehers bereits beendet ist. Der Abschneidevorgang beginnt, wenn die Klinken der Umschlingerarme wieder geschlossen sind. Nach Beendigung des Abschneidevorganges öffnen sich die Greifer des Wolleinziehers, so dass die Umschlinger das Garn um den Nadelhals legen können. Wenn die Umschlingerarme wieder in Ruhe sind, treten die Kreuzarme in Funktion um das Garn nach unten durch die Nadel zu führen. Wie weiter aus dem Kurvendiagramm ersichtlich ist, erfolgt die Bewegung der Knüpfvorrichtung über das Knüpfbett am Anfang des Knüpfvorganges und die Betätigung des Antriebs für den Musterleser gegen das Ende des Knüpfvorganges zu.

Anstelle des Musterlesers könnte auch eine elektronische Anzeige verwendet werden, welche die entsprechenden Farben als Ziffernfolge anzeigen würde, oder sogar die Farbwahl über einen Schrittmotor automatisch ausführen würde.

Mit der Teppichknüpfvorrichtung können verschiedene Straminarten verwendet werden, so z.B. der Nomalstramin mit 13 Knoten/10 cm und der Feinstramin mit 18 Knoten/10 cm.

## Patentansprüche

1. Verfahren zum Knüpfen von Teppichen, wobei eine Knüpfvorrichtung (2) durch einen Antriebsmechanismus (18, 62–68) über einen auf einem Straminhalter (8) befestigten Stramin (200) transportiert wird, und ein Zuführmittel (15) für das Knüpfgarn (94) vorgesehen ist, wobei mit dem Antriebsmechanismus Kurvenscheiben (39, 41, 44, 47) in Rotation versetzt werden zum Betätigen der verschiedenen Werkzeuge (45, 46, 78, 79, 95, 108) zur Ausführung des Knüpfvorganges, mit einem ersten Garntransportmittel (95) das zu knüpfende Garn in den Knüpfbereich gezogen wird, mit einem zweiten Garntransportmittel (78, 79) das Garn in den Bereich einer Nadel (45) geführt und die Nadel durch den Stramin hindurchgestossen und ein Garnstück abgeschnitten wird, worauf das Garnstück von einem dritten Garntransportmittel (46) mit beiden Enden durch die Nadelöffnung (114, 115) geführt, und die Nadel zurückgezogen wird, um einen Knoten zu bilden, dadurch gekennzeichnet, dass als Stramin (200) ein doppelfädiger Stramin verwendet wird, dass die Nadel (45) zwischen die beiden Fäden eines Doppelfadenpaars des Stramins hinduchgestossen wird, dass von dem dritten Garntransportmittel (46) das abgeschnittene Garnstück über die beiden Fäden des Doppelfadenpaars des Stramins gelegt wird, und die freien Enden des Garnstücks um die beiden Fäden des Doppelfadenpaars und durch die Nadelöffnung (114, 115) geführt werden, und dass die Nadel (45) beim Zurückziehen einen doppelten Knoten mit dem Doppelfadenpaar des Stramins bildet.

2. Verfahren nach Patentanspruch 1, dadurch gekennzeichnet, dass mit dem als Umschlingerarme (78, 79) ausgebildeten zweiten Garntransportmittel das Garn (94) teilweise um einen Nadelhals (141) geschlungen wird.

3. Verfahren nach Patentanspruch 1, dadurch gekennzeichnet, dass während des Knüpfvorganges der zuletzt geknüpfte Knoten (201) mit einem Zurückhaltemittel (60) von der Knüpfstelle weggeschoben wird.

4. Verfahren nach einem der vorhergehenden Patentansprüche, dadurch gekennzeichnet, dass mit der Nadel (45) zugleich ein Zentrierstift (26) zur Fixierung der Knüpfvorrichtung in Bezug auf den Stramin (200) durch den Straminhalter (8) gestossen wird.

5. Verfahren nach einem der vorhergehenden Patentansprüche, dadurch gekennzeichnet, dass ein vom Antriebsmechanismus gesteuerter Antriebshebel (69) eine in einem Musterleser (3) vorgesehene Vorlage (23) zur Bestimmung der zum Knüpfen zu verwendenden Garnfarbe weitertransportiert.

6. Verfahren nach einem der vorhergehenden Patentansprüche, dadurch gekennzeichnet, dass mit dem Zuführmittel (15) die zum Knüpfen zu verwendende Garnfarbe entsprechend der Vorlage ausgewählt wird.

7. Verfahren nach einem der vorhergehenden Patentansprüche, dadurch gekennzeichnet, dass die Betätigung des Zuführmittels (15) zur Farbwahl des Garnes automatisch entsprechend einem Datenträger (23) erfolgt.

8. Knüpfvorrichtung zur Durchführung des Verfahrens nach Patentanspruch 1, mit einem Antriebsmechanismus (18, 62–68) zum Transportieren der Vorrichtung über einen Straminhalter (8) und einem Zuführmittel (15) zur Zuführung des Knüpfgarns (94), wobei vom Antriebsmechanismus drehbare Kurvenscheiben (39, 41, 44, 47) zur Betätigung der verschiedenen Werkzeuge zur Ausführung des Knüpfvorganges vorgesehen sind, und ein erstes Garntransportmittel (95) zum Transport des Garnes vom Zuführmittel zum Knüpfbereich, ein zweites Garntransportmittel (78, 79) zum Führen des Garnes in den Bereich einer Nadel (45) und ein drittes Garntransportmittel (46) zum Führen des Garnes durch eine in der Nadel (45) vorgesehene Öffnung (114, 115) sowie ein Abschneidemittel (108) vorgesehen sind, dadurch gekennzeichnet, dass die Nadel (45) in ihrem Ende zwei parallele, durch einen Steg getrennte, längliche, vertikale Öffnungen (114, 115) aufweist.

9. Vorrichtung nach Patentanspruch 8, dadurch gekennzeichnet, dass die Öffnungen (114, 115) im Nadelende an ihren unteren Enden verjüngt sind.

10. Vorrichtung nach Patentanspruch 8 oder 9, dadurch gekennzeichnet, dass das erste Garntransportmittel als mit zwei beweglichen Greiferarmen versehene Einzugszange (95) ausgebildet ist.

11. Vorrichtung nach einem der Patentansprüche 8 bis 10, dadurch gekennzeichnet, dass das zweite Garntransportmittel zwei mit Klinken zum Ergreifen des Garnes versehene, gegeneinander verdrehbare Umschlingerarme (78, 79) umfasst.

12. Vorrichtung nach einem der Patentansprüche 8 bis 11 dadurch gekennzeichnet, dass das dritte Garntransportmittel zwei parallel zur Nadel angeordnete Kreuzarme (46a, 46b) umfasst.

13. Vorrichtung nach einem der Patentansprüche 8 bis 12, dadurch gekennzeichnet, dass ein Zurückhaltemittel (60) für den zuletzt geknüpften Knoten vorgesehen ist.

14. Vorrichtung nach einem der Patentansprüche 8 bis 13, dadurch gekennzeichnet, dass ein parallel zur Nadel (45) angeordneter und mit dieser verschiebbarer Zentrierstift (26) zur Fixierung der Knüpfvorrichtung auf dem Straminhalter (8) vorgesehen ist.

15. Vorrichtung nach einem der Patentansprüche 8 bis 14, dadurch gekennzeichnet, dass das Zuführmittel als eine mit der Vorrichtung lösbar befestigte Garnkassette (15) ausgebildet ist.

16. Musterleser zur Verwendung mit der Knüpfvorrichtung nach einem der Patentansprüche 8 bis 15, gekennzeichnet durch eine Walze (20) zur Führung einer Vorlage (23) zur Bestimmung der zum Knüpfen zu verwendenden Garnfarbe, Antriebsmittel (194) zum Drehen der Walze sowie einem Anzeigeorgan (24).

17. Straminhalter zur Verwendung mit der Knüpfvorrichtung nach einem der Patentansprüche 8 bis 15, gekennzeichnet, durch eine aufklappbare Zahnschiene (9) zur Führung der Knüpfvorrichtung (2), Haltezähnen (25) zum Einführen eines Zentrierstiftes (26) und Haltezapfen (28) für den Stramin (200).

**Claims**

1. Process for knotting rugs, a knotting device (2) being transported by a drive mechanism (18, 62–68) over a canvas (200) fixed on a canvas holder (8), and a feed means (15) being provided for the knotting yarn (94), cam plates (39, 41, 44, 47) being set in rotation by means of the drive mechanism for actuating the various tools (45, 46, 78, 79, 95, 108) for carrying out the knotting operation, the yarn to be knotted being drawn into the knotting zone by means of a first yarn-transport means (95), the yarn being led into the region of a needle (45) by means of a second yarn-transport means (78, 79), and the needle being pushed through the canvas and a piece of yarn cut off, whereupon the piece of yarn is led with both ends through the needle aperture (114, 115) by means of a third yarn-transport means (46), and the needle is retracted in order to form a knot, characterized in that a double-thread canvas is used as the canvas (200), that the needle (45) is pushed through between the two threads of a double-thread pair of the canvas, that the cut-off piece of yarn is laid by the third yarn-transport means (46) over the two threads of the double-thread pair of the canvas, and the free ends of the piece of yarn are led around the two threads of the double-thread pair and through the needle aperture (114, 115), and that upon retraction the needle (45) forms a double knot with the double-thread pair of the canvas.

2. Process according to patent claim 1, characterized in that the yarn (94) is partially wound around the neck of a needle (141) by means of the second yarn-transport means taking the form of snaring arms (78, 79).

3. Process according to patent claim 1, characterized in that during the knotting operation, the last-tied knot (201) is pushed away from the knotting location by means of a retaining means (60).

4. Process according to one of the preceding patent claims, characterized in that a centring pin (26) for fixing the knotting apparatus relative to the canvas (200) is pushed through the canvas holder (8) simultaneously with the needle (45).

5. Process according to one of the preceding patent claims, characterized in that a driving lever (69) controlled by the drive mechanism advances a pattern (23) provided in a pattern reader (3) for determining the yarn colour to be used for knotting.

6. Process according to one of the preceding patent claims, characterized in that the yarn colour to be used for knotting according to the pattern is selected with the feed means (15).

7. Process according to one of the preceding patent claims, characterized in that the operation of the feed means (15) for the colour selection of the yarn takes place automatically according to a data carrier (23).

8. Knotting device for carrying out the process according to patent claim 1, having a drive mechanism (18, 62–68) for transporting the device over a canvas holder (8) and a feed means (15) for feeding the knotting yarn (94), cam plates rotatable by the drive mechanism (39, 41, 44, 47) being provided for actuating the various tools for carrying out the knotting operation, and there being provided a first yarn-transport means (95) for transporting the yarn from the feed means to the knotting zone, a second yarn-transport means (78, 79) for leading the yarn into the region of a needle (45), and a third yarn-transport means (46) for leading the yarn through an aperture (114, 115) provided in the needle (45), as well as a cutting-off means (108), characterized in that the needle (45) has in its end two parallel, elongated, vertical apertures (114, 115) separated by a fillet.

9. Device according to patent claim 8, characterized in that the apertures (114, 115) in the end of the needle are tapered at their lower ends.

10. Device according to patent claim 8 or 9, characterized in that the first yarn-transport means takes the form of drawing tongs (95) provided with two movable gripper arms.

11. Device according to one of the patent claims 8 to 10, characterized in that the second yarn-transport means comprises two snaring arms (78, 79) pivotable towards one another and provided with pawls for grasping the yarn.

12. Device according to one of the patent claims 8 to 11, characterized in that the third yarn-transport means comprises two cross-arms (46a, 46b) disposed parallel to the needle.

13. Device according to one of the patent claims 8 to 12, characterized in that a retaining means (60) is provided for the last-tied knot.

14. Device according to one of the patent claims 8 to 13, characterized in that a centring pin (26) disposed parallel to the needle (45) and displaceable therewith is provided for fixing the knotting apparatus on the canvas holder (8).

15. Device according to one of the patent claims 8 to 14, characterized in that the feed means takes the form of a yarn cassette (15) detachably fastened to the apparatus.

16. Pattern reader for use with the knotting device according to one of the patent claims 8 to 15, characterized by a cylinder (20) for guiding a pattern (23) for determining the yarn colour to be used for the knotting, drive means (194) for rotating the cylinder, as well as an indicator member (24).

17. Canvas holder for use with the knotting device according to one of the patent claims 8 to 15, characterized by an upwardly swivellable rack rail (9) for guiding the knotting apparatus (2), holding teeth (25) for insertion of a centring pin (26), and holding lugs (28) for the canvas (200).

## Revendications

1. Procédé de nouage de tapis, dans lequel un dispositif de nouage (2) est déplacé au moyen d'un mécanisme d'entraînement (18, 62–68) au-dessus d'un canevas (200) qui est fixé à un support de canevas (8) et il est prévu un moyen d'alimentation (15) pour le fil à nouer (94) par lequel des cames (39, 41, 44, 47) sont mises en rotation afin d'actionner différents outils (45, 46, 78, 79, 95, 108) pour réaliser l'opération de nouage, le fil à nouer étant tiré dans la zone de nouage par un premier transporteur de fil (95), étant conduit dans la région d'une aiguille (45) par un second transporteur de fil (78, 79), l'aiguille étant poussée à travers le canevas et un segment de fil étant coupé après quoi le segment de fil est conduit par un troisième transporteur de fil (46) avec ses deux extrémités à travers l'ouverture de l'aiguille (114, 115) et l'aiguille est retirée pour former un noeud, caractérisé en ce que l'on utilise comme canevas (200) un canevas à double fil, en ce que l'aiguille (45) est poussée entre les deux fils d'un doublet de fils du canevas, en ce que le troisième transporteur de fil (46) dépose le segment de fil coupé sur les deux fils du doublet, conduit les extrémités libres du segment de fil autour des deux fils du doublet et à travers l'ouverture de l'aiguille (114, 115), et en ce que l'aiguille (45) forme, lorsqu'elle est retirée, un double noeud avec le doublet de fils du canevas.

2. Procédé selon la revendication 1, caractérisé en ce que, au moyen du deuxième transporteur de fil (94) qui présente la forme de bras d'enlacement (78, 79), le fil (94) est enlacé partiellement autour d'un col (141) de l'aiguille.

3. Procédé selon la revendication 1, caractérisé en ce que pendant l'opération de nouage le dernier noeud noué (201) est retiré de l'emplacement de nouage par un moyen de retenue (60).

4. Procédé selon l'une des revendications précédentes, caractérisé en ce qu'une tige de centrage (26) destinée à fixer le dispositif de nouage par rapport au canevas (200) est poussée à travers le canevas en même temps que l'aiguille (45).

5. Procédé selon l'une des revendications précédentes, caractérisé en ce qu'un levier d'entraînement (69) commandé par le mécanisme d'entraînement, déplace un modèle (23) disposé dans un lecteur de modèle (3) pour déterminer la couleur du fil à utiliser pour le nouage.

6. Procédé selon l'une des revendications précédentes, caractérisé en ce que la couleur du fil à utiliser pour le nouage est sélectionnée selon le modèle, par le moyen d'alimentation.

7. Procédé selon l'une des revendications précédentes, caractérisé en ce que la mise en action du moyen d'alimentation (15) pour la sélection de couleur du fil se produit automatiquement selon un porteur de données (23).

8. Dispositif de nouage pour la mise en oeuvre du procédé selon la revendication 1, comportant un mécanisme d'entraînement (18, 62–68) pour le déplacement du dispositif au-dessus d'un support de canevas (8), un moyen d'alimentation (15) pour l'alimentation du dispositif par le fil à nouer (94), des cames rotatives (39, 41, 44, 47) entraînées par le mécanisme d'entraînement de manière à actionner les différents outils qui exécutent l'opération de nouage, un premier transporteur de fil (95) assurant le transport du fil du moyen d'alimentation à la zone de nouage, un second transporteur de fil (78, 79) conduisant le fil dans la zone d'une aiguille (45), un troisième transporteur de fil (46) conduisant le fil à travers une ouverture (114, 115) prévue dans l'aiguille (45) et une moyen de coupe (108), caractérisé en ce que l'aiguille (45) présente dans sa partie extrême deux ouvertures alongées, parallèles, séparées, disposées verticalement.

9. Dispositif selon la revendication 8, caractérisé en ce que les ouvertures (114, 115) prévues dans l'extrémité de l'aiguille, sont resserrées à leur extrémité inférieure.

10. Dispositif selon la revendication 8 ou la revendication 9, caractérisé en ce que le premier transporteur de fil présente l'agencement d'une pince d'engagement pourvue de deux bras d'accrochage mobiles.

11. Dispositif selon une des revendications 8 à 10, caractérisé en ce que le deuxième transporteur de fil comporte deux bras d'enlacement (78, 79) pourvus de lames aptes à saisir le fil, mobiles en rotation l'un contre l'autre.

12. Dispositif selon l'une des revendications 8 à 11, caractérisé en ce que le troisième transporteur de fil comporte deux bras (46a, 46b) placés en croix, parallèles à l'aiguille.

13. Dispositif selon l'une des revendications 8 à 12, caractérisé en ce qu'il est prévu un moyen de retenue (60) agissant sur le dernier noeud noué.

14. Dispositif selon l'une des revendications 8 à 13, caractérisé en ce qu'il est prévu une tige de

**0 098 245**

centrage (26) disposée parallèlement à l'aiguille, déplaçable avec cette dernière, pour la fixation du dispositif de nouage sur le support de canevas (8).

15. Dispositif selon l'une des revendications 8 à 14, caractérisé en ce que le moyen d'alimentation est agencé sous forme d'un coffret à fil (15) fixé de manière amovible au dispositif.

16. Lecteur de modèle prévu pour être utilisé avec un dispositif de nouage selon l'une des revendications 8 à 15, caractérisé en ce qu'il comporte un rouleau (20) pour le guidage d'un modèle (23) pour la détermination des couleurs des fils à utiliser pour le nouage, des moyens d'entraînement (194) pour faire tourner le rouleau, et un organe indicateur (24).

17. Support de canevas pour utilisation avec le dispositif de nouage selon l'une des revendications 8 à 15, caractérisé par une crémaillière (9) relevable pour le guidage du dispositif de nouage (2), par des dents de maintien (25) pour l'engagement d'une tige de centrage (26) et par des plots (28) de maintien, pour le canevas (200).

FIG. 1

FIG. 2

0 098 245

# FIG. 3

FIG. 4

0 098 245

## FIG. 5

36 · 34 · 53 · 13
110 · 111 · 112
98
109 · 108 · 97 · 70

## FIG. 6

## FIG. 7

45
113 · 115 · 114 · 116 · 117 · 118
28 · 27

## FIG. 8

28 · 27 · 28

FIG. 9

FIG. 10

FIG. 11

FIG. 12

FIG. 13

FIG. 14

FIG. 15

FIG. 16

FIG. 17

FIG. 16a

FIG. 18

FIG. 19

FIG. 20

FIG. 21

FIG. 22

FIG. 23

FIG. 24

FIG. 25

0 098 245

FIG. 26

FIG. 27

FIG. 28

FIG. 29

# FIG. 30

78

79

82 94 83

80 81

78

141

79

94

FIG. 31

86

80 81

FIG. 35

FIG. 34

FIG. 33

FIG. 32

# FIG. 36